(19) Europäisches Patentamt / European Patent Office / Office européen des brevets

(11) **EP 3 992 871 A1**

(12) # EUROPEAN PATENT APPLICATION

(43) Date of publication:
**04.05.2022 Bulletin 2022/18**

(21) Application number: **20204909.4**

(22) Date of filing: **30.10.2020**

(51) International Patent Classification (IPC):
***G06Q 10/00*** *(2012.01)*

(52) Cooperative Patent Classification (CPC):
**G06Q 10/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Bayer AG**
  **51373 Leverkusen (DE)**
- **Technische Universität Dortmund**
  **44227 Dortmund (DE)**

(72) Inventors:
- **Kalliski, Marc**
  **42799 Leichlingen (DE)**
- **Minten, Henrik**
  **42799 Leichlingen (DE)**
- **Hille, Rubin**
  **51063 Köln (DE)**
- **Brandt, Heiko**
  **51371 Leverkusen (DE)**
- **Buss, Felix**
  **50823 Köln (DE)**
- **Hecht, Felix**
  **50733 Köln (DE)**
- **Krämer, Stefan**
  **51371 Leverkusen (DE)**
- **Janus, Tim**
  **44137 Dortmund (DE)**
- **Cegla, Maximilian**
  **44145 Dortmund (DE)**

(74) Representative: **BIP Patents**
**c/o Bayer Intellectual Property GmbH**
**Alfred-Nobel-Straße 50**
**40789 Monheim am Rhein (DE)**

(54) **ENERGY MANAGEMENT SYSTEM FOR BATCH PRODUCTION PROCESSES**

(57) The present invention relates to an energy management system for production processes, wherein unmeasured energy consumption of sub-systems and / or process steps in sub-systems is estimated. The solution of the invention is particularly adapted for the energy management of batch production processes.

Fig. 3

**EP 3 992 871 A1**

**Description**

The present invention relates to an energy management system for production processes, wherein unmeasured energy consumption of sub-systems and / or process steps in sub-systems is estimated. The solution of the invention is particularly adapted for the energy management of batch production processes.

Economic pressure and environmental factors challenge the chemical industry worldwide; the environmental requirements are increased by policy makers. More efficient production processes, for example, by reducing the specific energy consumptions are therefore needed.

An effective energy management system (EnMS) for continuous and batch processes depends on measurements to capture information about the energy consumption, production output, and external factors that influence the achievable process performance (e.g. ambient temperature). A crucial step in energy management and resource efficiency analysis is the identification of energy intensive unit operations, to prioritize the efforts to improve the energy efficiency. The energy demand for an entire process plant (further referred to as overall energy demand or consumption) is typically known, because a central measurement collects data for the billing process. However, if not all unit operations are equipped with local measurements, the share of the total energy demand cannot be allocated correctly to the individual consumers.

In the present application, the energy efficiency is determined on the unit level - sub-system level or even on process step level in a sub-system - and subsequently aggregated to the overall plant performance, using the real-time resource efficiency indicator framework as published by Kalliski *et al.* [Kalliski, M. and Engell, S., 2017. Real-time resource efficiency indicators for monitoring and optimization of batch-processing plants. The Canadian Journal of Chemical Engineering, 95(2), pp. 265-80]. The framework considers additional aspects of resource efficiency, alongside energy efficiency. In order to achieve an ISO50001 compliant EnMS the relevant subset of Energy Performance Indicators (EnPI) is used. These generic indicators can be applied to every unit of a plant and are generally defined as energy input per product output (see equation (1-1)). They are defined and indexed as resource and product specific (RPS) and can be aggregated to an overall indicator.

$$EnPI_{RPS} = \frac{Energy\ input}{Product\ output} \qquad (1\text{-}1)$$

Evidently, this bottom-up approach can only be performed for the plant sub-systems that are equipped with a local measurement of the energy consumption, per utility. EnMS generally aim to identify and analyze the most energy intensive units, to target the largest consumers first.

However, to be reliable, analysis would also require sufficient knowledge about the consumption of unmeasured units. From the EnMSs point of view they can only be neglected if their share is sufficiently small.

Therefore, there is a need for a solution allowing local allocation of energy consumption also in unmeasured sub-systems for better energy management.

In the present invention the problem is solved by an energy management system, wherein an overall energy demand for the process plant is available. Additionally, some local energy measurements of energy consumption may be available for some sub-systems. The required data about the overall and available local energy consumption can typically be acquired from a process control system (PCS). Subsequently, the energy management system estimates the energy demand for unmeasured equipment based on the available information about the operation of the plant according to the method of the invention by solving a regression problem. Said estimation is achieved by determining an unattributed energy demand as a function of time and distributing this energy demand to the unmeasured sub-systems and / or process steps using a regression model, wherein the local energy demand for the unmeasured sub-systems and / or process steps is deduced from the model parameters.

Said model parameters are calculated using secondary information (also called regressor) for example the processing times and batch sizes within the unmeasured sub-systems and / or process steps to solve the underlying regression problem.

The results may serve as a basis to decide if additional measurement instrumentation is required or if the current measurement arrangement is deemed to be enough.

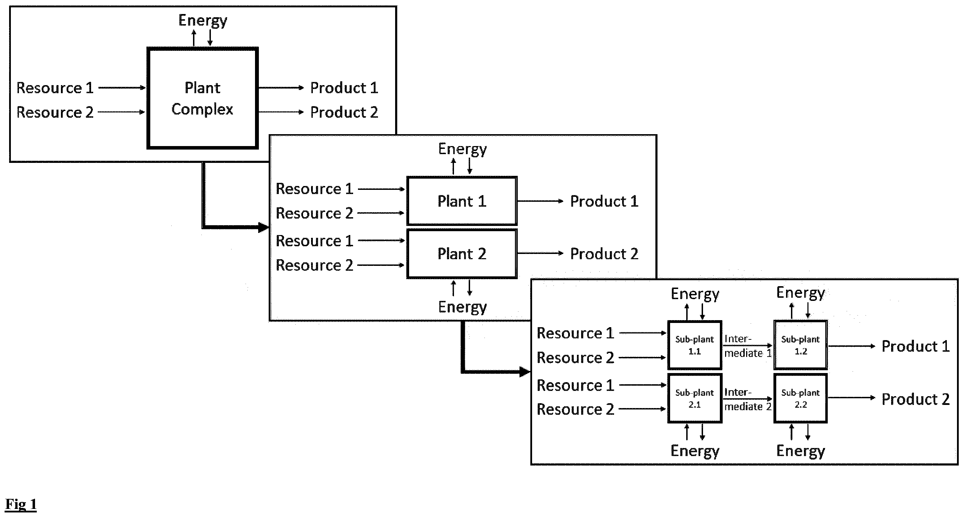

For better analysis the process plant is divided into sub-systems (also referred to as sub-plants) and / or process steps based on their contribution to the material and energy consumption. Figure 1 shows an exemplary decomposition of a plant complex, also called resource managed unit (RMU) [Anon, 2017. MORE. Resource Efficiency for Europe. Real-time monitoring and optimization of resource efficiency in integrated processing plants, s.l.: s.n.,].

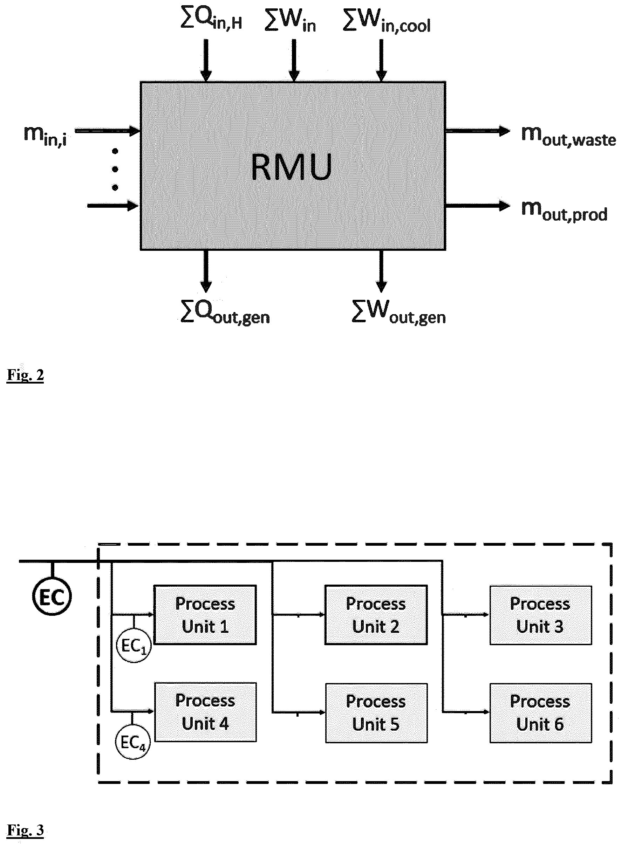

The more information on flow measurements of ingoing and outgoing streams in an RMU is considered, the more reliable the energy efficiency analysis. Figure 2 shows the common denotations of the streams. In the RMU the ingoing raw materials $m_{in,i}$ are converted and leave the unit as product stream $m_{out,prod}$ or waste stream $m_{out,waste}$. For this conversion, the unit consumes energy in the form of heat transfer mediums $Q_{in,H}$ or electrical energy $W_{in}$ and $W_{in,cool}$. Depending on the process type the resulting streams are either heated or cooled and the heat energy $Q_{out,gen}$ or the electrical energy $W_{out,gen}$ is generated [Kalliski, M. and Engell, S., 2017. Real-time resource efficiency indicators for monitoring and optimization of batch-processing plants. The Canadian Journal of Chemical Engineering, 95(2), pp. 265-80].

In the present invention, RMUs are defined in consideration of measured ingoing and outgoing material and energy streams. Typically, the user defines RMUs of the process plant using a user interface. The configuration of the plant consists of the RMUs, their relations and the measurements of ingoing and outgoing streams. This information is stored and later used for the attribution of energy consumption.

Figure 3 shows a diagram of the process plant comprising RMUs for which energy consumption is measured (EC1, EC4, EC6) and RMUs for which no energy consumption is measured but other information on their operation mode is available (units 2, 3, 5).

The total energy consumption (EC) is the sum of the energy consumptions of each RMU $EC_n$ at every time where n denotes the number of the RMUs.

$$EC(t) = \sum_n EC_n(t) \qquad\qquad (1\text{-}1)$$

The measurements of the RMUs can be separated into two different groups. The first group contains the m measured energy consumptions $EC_m$ while the second group contains the unmeasured energy consumptions $EC_u$. Equation (4 1) can be rewritten as

$$EC(t) = \sum_m EC_m(t) + \sum_u EC_u(t) \qquad\qquad (1\text{-}2)$$

The overall energy consumption $EC$ and the local consumptions $EC_m$ of the measured units are known, and from this, the sum of the unmeasured local consumption can be calculated using the method of the invention. This sum comprises all missing measurements to be estimated.

According to the method of the invention, energy demand over time is modeled as following.

In a first step, available measurements of overall energy consumption of the plant and if available of some of the sub-systems are acquired, including data for multiple batch sub-systems. These data are typically acquired from a process control system (PCS), manufacturing execution systems (MES) or a process historian, said system collecting and processing measurements from sensors and/or energy meters, typically in a continuous manner. Typically, the data collection is conducted at sub-system level for the utilities heat, steam, cooling, and/or electricity.

To perform the estimation of the energy consumption of the unmeasured sub-systems and / or process steps, a historical data set of at least one year is preferably used, in order to have sufficient information.

For batch production processes, it is preferred to discretize the data according to each batch and sub-system. Thus, the acquired data is prepared by splitting continuous data in batches, resulting in a feature list per batch that aggregates information from the time series data.

The sub-systems mainly comprise one main batch vessel and its peripheries like columns, heat exchangers and additional storage tanks. It is most preferred to split the process in process steps per sub-systems. Sub-systems or process steps are defined by their process parameters.

Process parameters for which measurements are available, typically comprises the following:

• Amount and source of raw material

• Amount and target of product

• Batch duration

• Ambient temperature during batch

• Amount of steam of each pressure level

• Amount of cooling medium

- Batch number

**[0024]** Typically, more specialized process parameters, for example duration of each process step or the reflux ratio of columns, can be used for information of the process and its operation.

In a further step, the unmeasured part of the total energy consumption as a function of time is calculated as the difference between the overall energy consumption of the process plant and the energy consumption of the measured sub-systems (for which energy measurements are acquired) if available:

$$\sum_u EC_u(t) = EC(t) - \sum_m EC_m(t) \qquad (1\text{-}3)$$

Then, the unallocated part of the overall energy consumption is attributed to unmeasured RMUs by estimating the average consumption in consideration of the process parameters.

In a first example the RMU specific consumptions are calculated by using one or more regression models, for example a neural network, a random forest model or a linear model or a combination thereof, to describe the time-varying energy consumption based on the time series data of the subsystem state. In an example, said sub-system state is characterized by operation status (in operation/idle), the batch size, the active process steps within the sub-systems, the process temperatures or a combination thereof.

In a first embodiment, the model parameters are obtained by solving an optimization problem based on at least one formulation of the model using the information if the sub-systems are idle or in use as a regressor.

In a preferred embodiment, the model parameters are obtained by solving an optimization problem based on the information if the sub-systems are idle or in use and which process step is currently active in the sub-system in use as regressors.

In a most preferred embodiment, the model parameters are obtained by solving an optimization problem based on the information with a different level of detail of the regressors: (1) using only the information if the sub-systems are idle or in use, (2) which process step is currently active in the subsystem in use , and (3) adding additional information about the process steps of sub-systems such as batch size, reaction temperature, etc..

A bigger historical dataset providing more information about the process is most advantageous. It is preferred that the historical data set comprises information collected over a measurement period of at least two months depending on the number of unmeasured sub-systems. It is most preferred that information out of different operating schedules is used to enable or improve the quality of the prediction.

From the calculated model parameters, it is then possible to obtain the average energy consumption per sub-systems or process step in a sub-system or batch using methods of the art in consideration of the model type. In an example a linear model was used.

In addition to the model parameters, the regression model delivers the confidence intervals for the parameters and overall prediction of energy consumption, based on the standard deviation. The size of the confidence intervals is a measure for the uncertainty of the calculated model parameters. The confidence interval should be smaller than the parameter value and the difference between the parameters that are compared. If the interval is not sufficiently small, no statistically sound deduction can be made. The uncertainty can usually be reduced by: (1) using a larger data set, (2) increasing the temporal resolution, and (3) including additional data process information.

In an embodiment definition of a new process schedule is introduced in the energy management system to forecast the overall energy consumption based on the attributed measured and unmeasured sub-systems and / or their process steps.

The energy management system of the present invention can be used:

- to identify the main consumer for reporting;

- to target the largest units with high uncertainty, because of suspected improvement potential by reduction of variability;

- for technology assessments for large consumers by comparing different process plant configurations,

- to derive action items, e.g. implement new measurements, vary the operating schedules to enable or improve the quality of the prediction, calculate the savings potential based on variance or a combination thereof.

Another approach that can be used in exceptional cases is the estimation of the energy by comparison with structurally similar units.

The solution of the invention is applicable for a process plant for which an overall energy consumption is measured and comprising at least two unmeasured sub-systems.

With the help of process parameters and linear regression, energy consumption of unmeasured sub-systems and steps can be estimated.

First object of the present invention is therefore an energy management system for production processes comprising batch steps in a process plant, wherein

- an overall energy consumption of the process plant is measurable,
- The process plant comprises at least two sub-systems, whose energy consumption is not measurable,

Said energy management system comprising a processor configured for estimation of energy consumption of the at least two sub-systems which energy consumption is not measurable using a regression model.

In an embodiment the estimation is achieved by calculating an unattributed energy demand over time and distributing this energy demand to unmeasured sub-systems and / or unmeasured process steps in a sub-system using a regression model, wherein the local energy demand is deduced from the model parameters.

A further object of the present invention is a method for analysis of energy consumption of a process plant in which a production process is conducted, said process plant comprising sub-systems in which process steps are conducted, said method comprising the following steps:

a. If applicable, defining sub-systems and / or process steps for which measurement over time is acquired;

b. Defining at least two sub-systems and / or process steps for which no measurement is acquired;

c. Acquiring measurements over time for overall energy consumption of the process plant and measurements for energy consumption of the at least one sub-system of a. if available;

d. Calculating an unattributed overall energy demand over time as the difference between the overall energy consumption of the process plant and the energy consumption of the at least one sub-systems of a.;

e. Attributing the unattributed energy demand to the sub-systems of b. using a regression model, in which the local energy demand for the sub-systems is deduced from the model parameters;

f. Outputting energy consumption of the at least one sub-systems for which no measurement is acquired.

Further objects of the present invention are a computer program element, which when executed by a processor is configured to carry out the method of the invention and a computer readable medium having stored the said program element.

The use of terms "a" and "an" and "the" and similar referents in the context of describing the invention (especially in the context of the following claims) are to be construed to cover both the singular and the plural, unless otherwise indicated herein or clearly contradicted by context. The terms "comprising", "including", "having", and "containing" are to be construed as open-ended terms (i.e. meaning "including but not limited to") unless otherwise noted.

The use of any and all examples, or exemplary language (e.g., "such as") provided herein, is intended merely to better illuminate the invention and does not pose a limitation on the scope of the invention unless otherwise claimed. No language in the specifications should be constructed as indicating any non-claimed element as essential to the practice of the invention.

Preferred embodiments of this invention are described, including the best mode known to the inventors for carrying out the invention. Variations of those preferred embodiments can become apparent to those of ordinary skilled artisans to employ such variations as appropriate, and the inventors intend for the inventions to be practiced otherwise than specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Example:

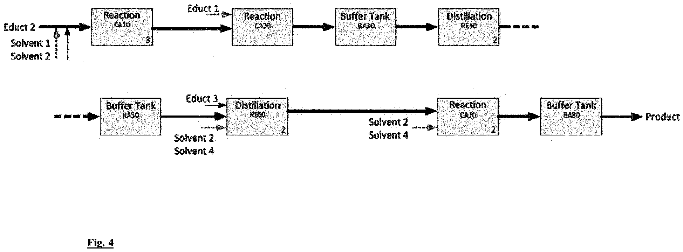

The method of the invention was tested on part of a plant for the production of an insecticide. The primary process operations are shown in Figure 4 and are operating in batch mode, while the secondary structure is a mixture of continuous and batch operations.

The process comprises several recycle streams which are indicated by the arrows for long-range connections.

As shown, the primary process units are well equipped, and most process values are measured and available online. For proof of concept, some process units were considered not to be measured and available measurements were set aside. Energy consumption was estimated for these units using the method of the invention. Measurements were used for validation of the estimation.

Process steps that consist of several parallel units are indicated by the number in the lower right corner representing the number of units.

The main process stage consists of five central unit operations that are connected by three buffer tanks to secure a trouble-free production. The first two steps are realized in CA10 and CA20, where the primary reactions take place. Since the residence time in CA10 is higher, it consists of three parallel reactors while CA20 is realized in only one reactor. In the first step, one reactant is mixed with several solvents and is converted to the main product and a by-product that is further treated in secondary process steps and leaves the process as a waste stream. The product reacts exothermic with another reactant in CA20 and is stored in the first buffer tank BA30. There, the stream is split up into two streams entering the parallel distillations RE40.1 and RE40.2 where the unreacted raw material is separated and further cleaned in the secondary steps to be recycled. The product stream is temporarily stored in the buffer tank RA50 followed by the next distillation and purification steps in RE60 and CA70. The final step is the buffer tank BA80 from where the product is further treated batch-wise.

Since the cooling energy consumptions are mainly influenced by one process unit, just the heating energy consumption of the process units are considered. From the 13 steam measurements, nine measurements in the main batch processes were considered. Furthermore, no overall measurement of the overall energy consumption of these considered process units were available. Due to this, the energy consumption was calculated manually according to equation (1-1). The overall energy consumption was split into measured and unmeasured energy consumption, according to (1-2).

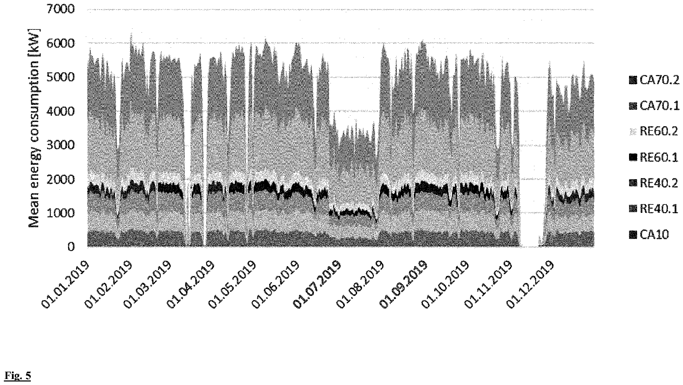

Figure 5 shows measured energy consumption of the considered process units

These calculated overall energy consumptions are written in the output vector $Y_t$ for the optimization problem, where each row represents one observation.

$$Y_t = \begin{pmatrix} 3904.98 \\ 3888.75 \\ \vdots \\ 4207.41 \end{pmatrix} \tag{1-4}$$

These values were estimated by an optimization problem using regressor matrices to map the inputs to $Y_t$. Eight different datasets were used with the periods shown in Table 1 to evaluate the influence of the size of the datasets.

Table 1: Time periods of datasets used for the optimization problem

| Dataset | Begin | End |
|---|---|---|
| 1 | 2019-01-01 | 2019-12-21 |
| 2 | 2019-01-01 | 2019-09-30 |
| 3 | 2019-01-01 | 2019-06-30 |
| 4 | 2019-01-01 | 2019-04-30 |
| 5 | 2019-01-01 | 2019-03-31 |
| 6 | 2019-01-01 | 2019-02-28 |
| 7 | 2019-01-01 | 2019-01-31 |
| 8 | 2019-01-01 | 2019-01-21 |

**a. Regressor - operating mode**

The first type of regression uses the information about the operating mode of the nine considered process units. This data can be obtained, for example, from the steam valve positions. The regressor matrix $\phi_{OM}$ for this considered case is defined as follows.

$$\Phi_{OM} = \begin{pmatrix} 1 & 0 & 1 & 0 & 0 & 1 & 1 & 0 & 1 \\ 1 & 0 & 1 & 0 & 0 & 1 & 1 & 0 & 1 \\ 1 & 0 & 1 & 0 & 0 & 0 & 1 & 0 & 1 \\ \vdots & \vdots & \vdots & \vdots & \vdots & \vdots & \vdots & \vdots & \vdots \\ 0 & 1 & 1 & 1 & 0 & 1 & 0 & 0 & 1 \end{pmatrix} \tag{1-5}$$

With this regressor matrix, the optimization problem (1-6) was solved using a non-negative linear solver. This way, the inequality constraint on the model parameters can be considered. $\theta_{OM}$ denote the model parameters describing the average consumption per unit.

$$\min_{\theta_{OM}} \frac{1}{t} \|Y_t - \Phi_{OM}\theta_{OM}\|_2^2 \qquad (1\text{-}6)$$

$$\text{s.t.} \quad \theta_{OM} \geq 0$$

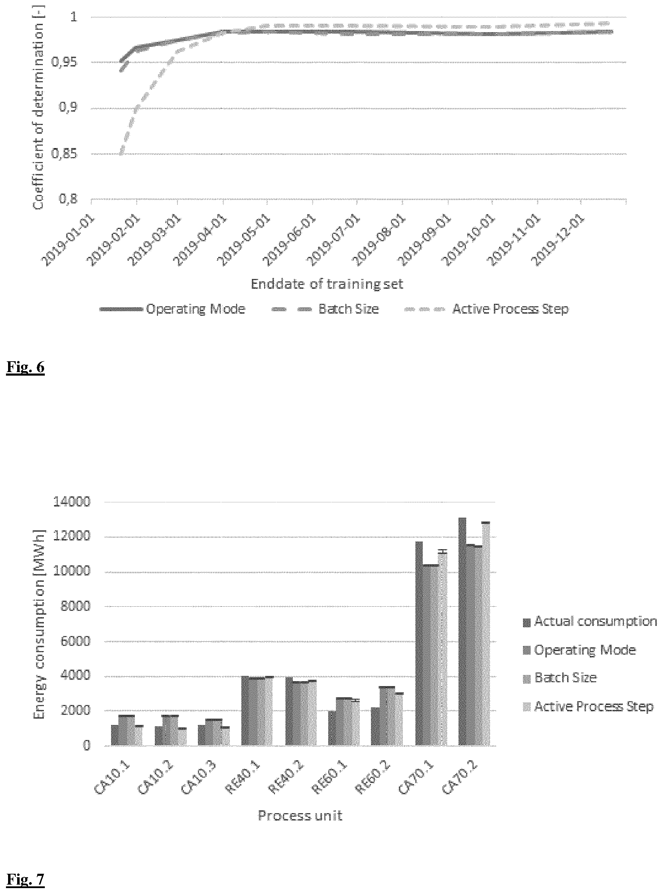

The coefficients of determination were calculated by comparing the estimated energy consumptions of the process units to the actual energy consumptions of the process units to compare the different estimations based on the datasets. The resulting coefficients are shown in Figure 6.

The shown confidence intervals are close to the estimated parameters, which means that the influence of the random error is small. In addition, deviations of the parameters of parallel process units can be seen, for example, between the three process units of CA10. To evaluate these deviations the estimated energy consumption was compared with the consumptions of the sub-systems as measured. Figure 7 shows the actual and estimated data in addition to this interval.

The deviations from the real energy consumption are still noticeable and they cannot be described by the confidence intervals. However, the estimates do reflect the true order of magnitude and are sufficiently accurate to rank the equipment according to their energy consumption.

b. **Regressors - operating mode and batch size**

By introducing the relative batch size into the regressor matrix, the accuracy of the optimization problem was improved, assuming a linear correlation between batch size and energy consumption. To consider the batch size the matrix $\phi_{BS}$ is required in addition to the matrix $\phi_{OM}$.

$$\Phi_{BS} = \begin{pmatrix} -0.061 & -0.018 & -0.478 & -0.895 & -0.386 & -0.673 & -0.124 & 0.018 & 0.228 \\ -0.061 & -0.018 & -0.478 & -0.895 & -0.386 & -0.673 & -0.124 & 0.018 & 0.228 \\ -0.061 & -0.018 & -0.478 & -0.895 & -0.386 & -0.673 & -0.124 & 0.018 & 0.228 \\ \vdots & \vdots & \vdots & \vdots & \vdots & \vdots & \vdots & \vdots & \vdots \\ 0.253 & -0.122 & -0.636 & 0.034 & 0.135 & -0.158 & -0.008 & -0.025 & 0.629 \end{pmatrix}$$

$$(1\text{-}7)$$

According to the equations (1-8) and (1-3), the required regressor matrix $\phi_{OM,BS}$ is calculated and utilized to solve the optimization problem (1-4).

$$\Phi_{OBS} = \Phi_{OM} \circ \Phi_{BS} = \begin{pmatrix} OM_{1,1} \cdot BS_{1,1} & OM_{1,1} \cdot BS_{1,1} & \cdots & OM_{1,1} \cdot BS_{1,1} \\ OM_{2,1} \cdot BS_{2,1} & OM_{2,2} \cdot BS_{2,2} & \cdots & OM_{2,N} \cdot BS_{2,N} \\ \vdots & \vdots & \ddots & \vdots \\ OM_{t,1} \cdot BS_{t,1} & OM_{t,2} \cdot BS_{t,2} & \cdots & OM_{t,N} \cdot BS_{t,N} \end{pmatrix} \qquad (1\text{-}8)$$

The matrices $\phi_{OM}$ and $\phi_{OBS}$ are combined to obtain one single matrix $\phi_{OM,BS}$.

$$\Phi_{OM,BS} = (\Phi_{OM}|\Phi_{OBS})$$

$$= \begin{pmatrix} OM_{1,1} & OM_{1,2} & \cdots & OM_{1,N} & OM_{1,1} \cdot BS_{1,1} & OM_{1,1} \cdot BS_{1,1} & \cdots & OM_{1,1} \cdot BS_{1,1} \\ OM_{2,1} & OM_{2,2} & \cdots & OM_{2,N} & OM_{2,1} \cdot BS_{2,1} & OM_{2,2} \cdot BS_{2,2} & \cdots & OM_{2,N} \cdot BS_{2,N} \\ \vdots & \vdots & \ddots & \vdots & \vdots & \vdots & \ddots & \vdots \\ OM_{t,1} & OM_{t,2} & \cdots & OM_{t,N} & OM_{t,1} \cdot BS_{t,1} & OM_{t,2} \cdot BS_{t,2} & \cdots & OM_{t,N} \cdot BS_{t,N} \end{pmatrix} \qquad (1\text{-}3)$$

Similar to the equation (1-6) the optimization problem can then be described as:

$$\min_{\theta_{BS}} \frac{1}{t} \left\| Y_t - \Phi_{OM,BS} \theta_{BS} \right\|_2^2 \qquad\qquad (1\text{-}4)$$

## c. Regressor - **Active process steps**

The last regression type used to increase the accuracy of the energy estimation further is based on the information about the active process steps of the sub-systems. These process steps further divide the operating mode into different temporal segments, where the average energy consumption is estimated for each of the steps. The used regression matrix $\phi_{SN}$ contains the categorical information about the process steps.

$$\Phi_{SN} = \begin{pmatrix} SN3 & SN9 & SN7 & SN8 & SN5 & SN11 & SN1 & SN10 & SN3 \\ SN3 & SN9 & SN7 & SN1 & SN5 & SN11 & SN1 & SN10 & SN3 \\ SN3 & SN9 & SN7 & SN2 & SN5 & SN11 & SN1 & SN10 & SN4 \\ \vdots & \vdots & \vdots & \vdots & \vdots & \vdots & \vdots & \vdots & \vdots \\ SN1 & SN13 & SN1 & SN5 & SN5 & SN1 & SN1 & SN10 & SN1 \end{pmatrix} \qquad (1\text{-}11)$$

Matrix (1-11) cannot directly be used to solve the optimization problem. First, the categorical data is transformed into binary data using one-hot encoding. In this case study, the encoding transforms the matrix $\phi_{SN}$ with nine columns to the matrix $\phi_{SN,en}$ that has 207 columns. With this matrix, the optimization problem can be solved using a non-negative linear solver. The coefficient of determination is plotted against the used dataset from Table 1 in Figure 6.

Figure 6 shows that the estimation based on the active process steps needs more data which is a result of significant increase in the number of parameters to be estimated. Nevertheless, the estimated parameters based on datasets with longer durations increase the accuracy compared to the other regression types. This increase was expected since the active process steps provide more information than the operating mode of the sub-systems due to a finer level of detail.

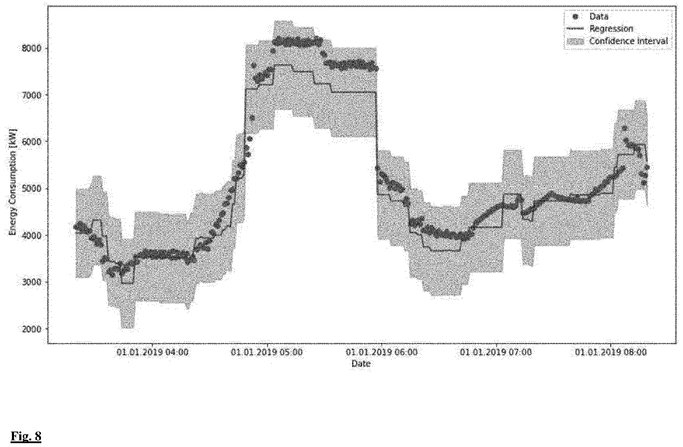

Figure 8 shows a comparison of the estimated consumption to the actual data considering the regressors mentioned above. Overall, for this application case, the estimation of the energy consumption is best when using the active process step information as a regressor.

However, as shown in Figure 6, the first approach only considering the idle/busy information is only marginally less accurate, while requiring less information and data preparation effort. Thus, using the first approach is a viable option in case the step information is not readily available or the historical data available for the analysis is severely limited.

## Description of the figures:

Figure 1 shows a decomposition of a plant complex into sub-systems according to Anon [Anon, 2017. MORE. Resource Efficiency for Europe. Real-time monitoring and optimization of resource efficiency in integrated processing plants, s.l.: s.n.,]

Figure 2 shows a generalized representation of an RMU with ingoing and outgoing streams [Kalliski, M. and Engell, S., 2017. Real-time resource efficiency indicators for monitoring and optimization of batch-processing plants. The Canadian Journal of Chemical Engineering, 95(2), pp. 265-80]

Figure 3 shows a diagram of the process plant comprising sub-systems for which energy consumption is measured (EC1, EC4, EC6) and sub-systems for which no energy consumption is measured but other information such as the operation mode is available (units 2, 3, 5).

Figure 4 show a diagram of the main process units of the example.

Figure 5 shows measured energy consumption of the considered sub-systems.

Figure 6 shows the coefficients of determination for the datasets using regressor operating mode, batch size or active process steps depending on the end date of the training set from Table 1.

Figure 7 shows a comparison of the estimated consumption of each subsystem to the actual data considering the regressors described in the example.

Figure 8 shows the actual data and the data estimated using the method of the invention.

**Claims**

1. An energy management system for batch production processes comprising batch steps in a process plant, wherein

   - An overall energy consumption of the process plant is measurable,
   - The process plant comprises at least two sub-systems, where the energy consumption is not measurable,

   said energy management system comprising a processor configured for estimation of energy consumption of the at least one sub-system which energy consumption is not measurable using a regression model.

2. Energy management system according to claim 1, wherein the production process comprises process steps whose energy consumption is measurable and at least two process steps where energy consumption is not measurable.

3. Energy management system according to any preceding claims, wherein estimation is achieved by calculating an unattributed energy demand over time and distributing this energy demand to unmeasured sub-systems or process steps thereof using a regression model, wherein the local energy demand for each sub-system is deduced from the model parameters.

4. Method for analysis of energy consumption of a process plant in which a production process is conducted, said process plant comprising sub-systems in which batch process steps are conducted, said method comprising the following steps:

   a. If applicable, defining at least one sub-system and / or process step for which measurement over time is acquired;
   b. Defining at least two sub-systems and / or process steps for which no measurement is acquired;
   c. Acquiring over time measurements for an overall energy consumption of the process plant and measurements for energy consumption of the at least one sub-systems of a. if available;
   d. Calculating an unattributed overall energy demand over time as the difference between the overall energy consumption of the process plant and the energy consumption of the sub-systems of a.;
   e. Attributing the unattributed energy demand to the sub-systems of b. using a regression model, in which the local energy demand for the sub-systems is deduced from the model parameters;
   f. Outputting the estimated energy consumptions of the sub-systems of b.

5. Method according to claim 4, wherein regressors of the regression problem are selected from a list comprising sub-system state in operation or idle, batch size, active process step or a combination thereof.

6. Method according to one of the claims 4 or 5, wherein the sub-systems and / or process steps with highest energy consumption are outputted.

7. Method according to one of the claims 4 to 6, wherein uncertainty of the estimated local energy consumption is calculated.

8. Method according to claim 7, wherein the sub-systems and /or process steps with highest uncertainty of the estimated local energy consumption are outputted.

9. Method according to one of the claims according to claims 4 to 8, wherein action items selected from a list comprising implementation of new measurements, varying operating schedules to enable or improve the quality of the prediction, calculating savings potential based on variance or a combination thereof are computed and outputted.

10. A computer program element, which when executed by a processor is configured to carry out the method of any of claims 4 to 9.

11. A computer readable medium having stored the program element of claim 10.

Fig 1

$\sum Q_{in,H}$    $\sum W_{in}$    $\sum W_{in,cool}$

$m_{in,i}$

RMU

$m_{out,waste}$

$m_{out,prod}$

$\sum Q_{out,gen}$    $\sum W_{out,gen}$

Fig. 2

EC

EC$_1$    Process Unit 1    Process Unit 2    Process Unit 3

EC$_4$    Process Unit 4    Process Unit 5    Process Unit 6

Fig. 3

Fig. 4

EP 3 992 871 A1

Fig. 5

13

**Fig. 6**

**Fig. 7**

**Fig. 8**

Europäisches
Patentamt

European
Patent Office

Office européen
des brevets

# EUROPEAN SEARCH REPORT

Application Number

EP 20 20 4909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 682 914 A1 (YOKOGAWA ELECTRIC CORP [JP]) 8 January 2014 (2014-01-08) * paragraph [0007] - paragraph [0165]; claims 1-21; figures 1-10 * | 1-11 | INV. G06Q10/00 |
| A | EP 3 301 623 A1 (BARTUCCI S P A [IT]) 4 April 2018 (2018-04-04) * paragraph [0038] - paragraph [0094]; claims 1-15; figures 1-7 * | 1-11 | |

TECHNICAL FIELDS
SEARCHED     (IPC)

G06Q

The present search report has been drawn up for all claims

| Place of search | Date of completion of the search | Examiner |
|---|---|---|
| Munich | 26 February 2021 | Viets, Ana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 4909

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2021

| Patent document cited in search report | | Publication date | Patent family member(s) | | Publication date |
|---|---|---|---|---|---|
| EP 2682914 | A1 | 08-01-2014 | CN | 103384893 A | 06-11-2013 |
| | | | EP | 2682914 A1 | 08-01-2014 |
| | | | JP | 6109066 B2 | 05-04-2017 |
| | | | JP | WO2012118067 A1 | 07-07-2014 |
| | | | SG | 192951 A1 | 30-09-2013 |
| | | | US | 2013338842 A1 | 19-12-2013 |
| | | | WO | 2012118067 A1 | 07-09-2012 |
| EP 3301623 | A1 | 04-04-2018 | EP | 3301620 A1 | 04-04-2018 |
| | | | EP | 3301623 A1 | 04-04-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KALLISKI, M. ; ENGELL, S.** Real-time resource efficiency indicators for monitoring and optimization of batch-processing plants. *The Canadian Journal of Chemical Engineering,* 2017, vol. 95 (2), 265-80